(19) Europäisches Patentamt
European Patent Office
Office européen des brevets

(11) Publication number: 0 116 608 B1

(12) # EUROPEAN PATENT SPECIFICATION

(45) Date of publication of patent specification: 26.11.86

(51) Int. Cl.[4]: **C 10 L 9/10**, C 10 L 5/46

(21) Application number: 83902752.1

(22) Date of filing: 26.08.83

(86) International application number: PCT/DK83/00079

(87) International publication number: WO 84/00976 15.03.84 Gazette 84/07

(54) **USE OF A LIME CONTAINING WASTE PRODUCT AS A FUEL.**

(30) Priority: 27.08.82 DK 3843/82

(43) Date of publication of application: 29.08.84 Bulletin 84/35

(45) Publication of the grant of the patent: 26.11.86 Bulletin 86/48

(84) Designated Contracting States: AT BE CH DE FR GB LI LU NL SE

(56) References cited:
EP-A-0 017 491
EP-A-0 076 397
DE-A-1 471 600
DE-A-2 501 503
DE-A-2 700 170
DE-A-2 838 873
DE-A-2 948 893
DE-A-3 015 710
FR-C- 859 043

Patent Abstracts of Japan, Vol. 5, No. 200 C 84, abstract of JP 56-122894, published 26 September 1981

(73) Proprietor: ECT Energy Conservation Technology I-S
Blokken 61
DK-3460 Birkeröd (DK)

(72) Inventor: JACOBSEN, Peter
Solbakkevej 25
DK-2820 Gentofte (DK)

(74) Representative: Patentanwälte TER MEER - MÜLLER - STEINMEISTER
Mauerkircherstrasse 45
D-8000 München 80 (DE)

(56) References cited:
Patent Abstracts of Japan, Vol. 6, No. 165 C 121, abstract of Jp 57-80493, published 20 May 1982

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 116 608 B1

**Description**

The present invention relates to the use of waste products being intimately mixed with lime as a fuel.

An expedient removal of waste materials, such as refuse, has become a greater and greater problem in the course of time. The most frequently used methods are dumping on dumps and combustion in refuse disposal plants.

Dumping is vitiated by considerable environmental problems, in particular obnoxious smells and a risk of pollution of ground water and streams, and the dump layout requirements are therefore constantly made more stringent.

Combustion of refuse in refuse disposal plants, with and without utilization of the heat generated by the combustion, is well-known. Thus, in recent years the generated heat has been utilized in combined refuse disposal and district heating plants, which with a view to the sale of the heat must be produced in accordance with the heating requirements.

However, the heating requirements fluctuate widely with the time of the year and the temperature, as opposed to the quantity of refuse which, within reasonable limits, may be considered uniform during the entire year with certain seasonally determined variations in the composition, since e.g. summer waste normally contains less plastics than winter waste.

Since combustion has to be effected immediately after collection owing to the limited durability of the waste, this seasonally determined variation involves a great loss of energy because the calorific value of the waste cannot be used to an optimum degree outside the heating season.

It has been proposed to solve this problem by pressing the crushed waste to briquettes, e.g. by mixing with pulverized coal and binder, cf. the GB Patent Specification No. 1 286 532, or by mixing with coal dust, cf. the DK Patent Specification No. 143,859. The first method, however, is cumbersome because it requires a heat treatment at about 200°C for 1 to 3 hours, and the second method is not adequate to ensure that the putrefaction of the waste stops, and the combustion moreover involves considerable obnoxious fumes.

It is described in the DE Auslegeschrift 24 51 093 that a temporary preservation of domestic waste and industrial waste containing putrescible organic components can be obtained by adding a highly viscous mixture of naphthenic acids having a molecular weight between 300 and 500.

It is stressed that these naphthenic acids can cause deactivation for a few days, to thereby avoid obnoxious smells in the period from collection until the waste has been brought to the location of deposit, e.g. with a view to decomposition for composting purpose.

It is admittedly briefly mentioned that the treated waste can also be burnt, but this must then be done prior to the cessation of the deactivation, and the method therefore does not remedy the problem of the above-mentioned loss of energy.

DE—A—28 38 873 discloses a method for the treatment of waste or refuse with lime to reduce the propagation of insects and/or other animals and the production of obnoxious gases and to thereby provide for a safe deposition of the treated material in landfills.

The object of the present invention is to provide a better utilization of waste material of this kind than using it as an inert landfill.

It has now been found that an intimate mixture of waste products with lime in the form of burnt lime, hydrated lime of burnt dolomite can be used as a fuel which can be stored for an extended period of time without causing obnoxious smells and other environmental problems and without it being necessary to press the material into briquettes or to perform other energy consuming compacting procedures.

The subject matter of the present invention therefore is the use as a fuel of the product obtained by intimately mixing waste products selected from refuse, sawmill waste, forestry waste, paper waste and agricultural waste, from which non-combustible and/or reusable components may optionally be sorted, with lime in the form of burnt lime (CaO), hydrated lime ($Ca(OH)_2$) or burnt dolomite in a sufficient amount for inactivating microorganisms present in the waste by providing a pH value in the liquid content of the waste of at least 11 and for substantially maintaining this pH during the entire period of storage.

The term "lime" is in the following meant to comprise both burnt lime, hydrated lime and burnt dolomite, as well as products containing such forms of lime and dolomite. The preferred compounds, however, are burnt lime and hydrated lime.

Lime treatment of domestic waste is admittedly proposed in the DE-Offenlegungsschrift 28 38 873. However, the treatment proposed in that publication is intended to solve another technical problem than the method of the invention, viz. controlled spreading of waste on dumps, to thereby overcome the known problems of dumping, viz. dust formation, obnoxious smells and ground water pollution.

The publication directly advises against both combustion of waste and composting, and it cannot therefore be considered obvious to use lime for the production of a fuel.

The inactivation of the microorganisms in the waste which is necessary to obtain a non-deteriorating fuel, calls for an increase in pH to at least 11 by addition of lime. If pH is below 11 immediately after the addition of lime, pH will rapidly fall, and the microbial development cannot therefore be controlled.

To obtain a reasonable safety margin, such amounts of lime should be used as will increase pH to at least 12.

According to the invention, it is possible to

utilize the known reaction of burnt lime with the water present in the waste. The burnt lime is converted to hydrated lime within a short period of time under strong generation of heat:

$$CaO + H_2O \rightarrow Ca(OH)_2 + Q$$

The conversion to hydrated lime causes an increase in pH in response to the added amount and the content of water. The burnt lime binds water so that the content of solids in the waste increases. The generation of heat advantageously contributes to neutralizing present microorganisms.

During storage of the fuel obtained, the hydrated lime gradually reacts with the omnipresent carbon dioxide according to the following reaction scheme:

$$Ca(OH)_2 + CO_2 \rightarrow CaCO_3 + H_2O + Q$$

If almost all the hydrated lime is converted to calcium carbonate, pH will drop to about 9 in this process, which proceeds slowly, and this reduces the stability of the fuel.

Since the purpose of the addition of lime is to stabiize the fuel for extended periods of time, right up to 8 months, without giving rise to obnoxious smells, the necessary amount of lime must be adapted in view of the following conditions:

a) water content in the waste
b) effect of admixing
c) content of neutralizing substances in the waste
d) storage conditions, including the expected period of storage, and in case of outdoor storage, rainfall and its content of acids.

Given a content of water in the waste of 20 to 40%, fully effective admixing, and reasonably normal waste without a great amount of acids, admixing of an amount of lime corresponding to about 4 kg CaO per metric ton of waste will be necessary to provide a pH of 12 to 25 °C.

To maintain this pH effectively for an extended period of time, an amount of 5% by weight, i.e. corresponding to 50 kg CaO per metric ton of waste, will normally suffice. Complete stabilization, also under more abnormal conditions, can be obtained by further addition of CaO, e.g. up to about 75 kg CaO per metric ton of waste, unless extreme conditions are involved.

The type of lime to be used in the concrete situation also depends upon the above-mentioned points a)-d), but particularly upon the water content in the waste.

To obtain simultaneous drying of the waste, CaO, in particular in the form of pulverized slightly burnt lime containing about 94% active CaO is preferred.

In case of addition of small amounts of lime, an equivalent amount of hydrated lime is normally preferred to avoid problems of slaking. The amounts of hydrated lime equivalent to the above-mentioned CaO amounts are 5.3, 66.3 and 99.4 kg $Ca(OH)_2$ per metric ton of waste.

It generally applies that the most expedient amount and type of lime must be determined by experiments.

As stated, it is decisive to the storage stability of the fuel produced that the lime and the waste are intimately mixed.

Depending upon the composition of the waste to be treated, certain more or less traditional pretreatments will be performed prior to the admixing of lime. In case of e.g. refuse, non-combustible and/or reusable components, such as building waste materials, iron, metals, glass and plastics, will normally be sorted upon receipt.

In a preferred embodiment of the invention the pre-treated waste is crushed in a rotary drum, to which the determined amount of lime is added at a suitable stage of the crushing procedure, preferably at its start, because this results in the most effective admixing, but the addition may also take place after some crushing.

The most expedient time of residence in the drum can be determined by experiments, but is normally at least 2 or 3 hours.

After treatment in the rotary drum the material is continuously removed and can now be stored without any risks, e.g. in a pit, in a building or in the open.

If, for reasons of space, it is desired to reduce the volume of the fuel, it may be compacted or pressed to bales or briquettes. For reasons of handling and transport, it may also be expedient to convert the fuel to pellets.

In an alternative embodiment, the optionally sorted waste is first mechanically crushed, e.g. in a hammer mill, a shredder or another grinding equipment, and the crushed material is mixed with lime in a traditional mixing device. This embodiment normally requires more energy than the above-mentioned co-grinding, but is a possibility in particular if the method of the invention is to be carried out on a plant already equipped with the stated crushing device.

It is not critical to the invention that the waste is sorted first, it being possible to sort the waste after the addition of lime.

In the foregoing, the invention has been explained in connection with the production of fuel from refuse, but it may advantageously be adapted to other forms of combustible waste, such as industrial waste of various types, sawmill waste, forestry waste, such as wet rotten bark, paper waste, agricultural waste in the form of e.g. straw, husk and rice straws, as well as the so-called screen residue from composting devices, and mixtures of such waste and/or mixtures with refuse.

In addition to being used for combustion in furnaces connected to the district heating network, the product used in accordance with the invention may also be used in connection with power works, for the production of cement, etc.

Likewise, the production does not have to take place in connection with the location where combustion is to take place, but may be effected at a decentral point in intermediate stations, reloading stations or dumps.

In addition to the savings in energy obtainable by using the present fuel, which reduces the coal, oil, gas or other fuel requirements, the very use of the fuel provides a plurality of advantages.

Thus, the admixed lime may cause a significant environmental improvement of the flue gases during the combustion process because e.g. sulfur and heavy metals possibly bind to the lime, which reduces the risk of bailer corrosion as well as the content of polluting acids and heavy metals in the flue gases.

During combustion the present lime is converted to burnt lime which reoccurs in the slag produced during the combustion. The burnt lime, when cooled in water or during the depositing of the slag, binds water to form hydrated lime which effectively binds heavy metals in the form of sparingly soluble compounds. This reduces the risk of leakage of heavy metals from the dumped slag.

Owing to the content of lime, and as an alternative to traditional depositing, the slag may advantageously be reused, e.g. by partial recycling, for the method of the invention or for admixing in waste water sludge on dumps. In addition to the deposit of the slag the admixing also solves the very great problems presented by sludge on dumps because the content of solids is increased, and the lime will stabilize the sludge.

Test report

About 200 kg of normal pure domestic waste without paper or other stabilizing waste materials were crushed in a hammer mill, and the iron was removed by a magnet.

The waste was very wet (a water content of 30 to 35%) and must be considered very easily putrescible waste.

The waste was packed in plastics sacks and was the following day weighed in four batches of fairly the same size. One batch was not admixed with lime, while the three others were admixed with 3.3, 6.6 and 10% by weight of lime, respectively. The lime used was pulverized hydrated lime from Faxe Kalk, which is unique by its fine grains (specific surface (BET) 15 to 18 $m^2/g$) and contains about 91% calcium hydroxide.

The waste was mixed with the lime in a small cement mixer in the stated ratios.

The waste, having stood 24 hours in closed plastics sacks, had already begun to putrefy.

After mixing the waste was pelletized in a "Matator" (Trade Mark) pellet press.

The samples, which now consisted of pellets with a diameter of 8 mm and a length of a few cm, was packed in four new plastics sacks, each having its own concentration of lime, and the sacks were placed in a warm loft. At intervals of about 14 days samples were then taken for microbiological examination by Alfred Jorgensen's Zymology Laboratory, of Copenhagen.

Direct microscopy was performed on all samples, and pH was measured.

Sample 1, which did not contain lime, putrefied strongly already the day after pelletization.

Sample 2, which contained 3.3% hydrated lime, putrefied strongly after just two days' storage.

Sample 3, which contained 6.6% hydrated lime, putrefied after about 43 days. It is observed that a partial sample of about 300 g, which was packed in a sealed glass, was still stable after 80 days. A possible conclusion of this may be that it is extremely rough for the waste to be stored in plastics sacks.

Sample 4, which contained 10% hydrated lime, was still unchanged after 80 days, and the most recent analysis of germ figures shows unchanged values.

It may be concluded on the basis of the tests that domestic waste, even of a very extreme nature, can be stabilized for at least 80 days, and probably longer under even very extreme conditions. The temperature in the loft fluctuated between about 35°C on sunny days to about 10°C in cool nights. However, the temperature was rarely below 15°C, and it was often considerably higher. The fluctuations in temperature caused condensed water to be formed on the inside of the plastics sacks, so that extremely good growth conditions were formed for the microorganisms.

It must be expected that the method can be made more effective in practice by:

mixing the lime effectively in a mixer drum, which crushes the waste before pelletization,

using 8% CaO instead of 10% $Ca(OH)_2$. CaO binds a considerable part of the water, and the water activity $a_w$ is reduced. The amount of $Ca(OH)_2$ formed by admixing 8% CaO will be 10.6%,

storing the waste under better conditions than in the test, which will usually be the case,

by the treated waste being predominantly of a less extreme nature than in the test.

No matter whether these four points are fulfilled or not, there is provided a method which can stabilize waste for at least 80 days and cause it to assume a shape which enables it to be used as a fuel. The pellets have an energy content of about 2500 kcal/kg of waste, and where they can replace oil, they represent a value of about dkr. 800 per metric ton at present.

**Claims**

1. Use as a fuel of the product obtained by intimately mixing waste products selected from refuse, sawmill waste, forestry waste, paper waste and agricultural waste, from which non-combustible and/or reusable components may optionally be sorted, with lime in the form of burnt lime (CaO), hydrated lime or burnt dolomite in a sufficient amount for inactivating microorganisms present in the waste by providing a pH value in the liquid content of the waste of at least 11 and for substantially maintaining this pH during the entire period of storage.

2. Use as a fuel of the product obtained in accordance with claim 1 wherein the lime is admixed in a sufficient amount to provide a pH of at least 12.

3. Use as a fuel of product obtained in accordance with claim 1 or 2, wherein the lime is admixed during simultaneous mechanical crushing of the waste, preferably in a rotary drum.

4. Use as a fuel of the product obtained in accordance with claim 1 or 2, wherein the lime is admixed after a preceding full or partial homogenization of the waste.

5. Use as a fuel of the product obtained in accordance with claim 1, wherein the waste is refuse having a content of water of 20 to 40%, and the lime is admixed in an amount of at least 4 kg per metric ton of waste, preferably at least 50 kg per metric ton of waste, calculated as CaO.

6. Use as a fuel of the product obtained in accordance with claim 1, wherein the lime is pulverized, slightly burnt lime.

**Patentansprüche**

1. Verwendung eines durch inniges Mischen von Abfallprodukten erhaltenen Produktes als Brennmaterial, welche aus Müll, Sägemühlabfall, Waldabfall, Papierabfall und Landwirtschaftsabfall gewählt sind, von denen nicht brennbare und/oder wiederverwendbare Bestandteile wahlweise getrennt werden können, mit Kalk in Form von gebranntem Kalk (CaO), gelöschtem Kalk oder gebranntem Dolomit in ausreichender Menge, um im Abfall vorhandene Mikroorganismen zu inaktivieren, indem ein pH-Wert im flüssigen Anteil des Abfalls von mindestens 11 hergestellt wird und dieser pH-Wert im wesentlichen während der gesamten Lagerdauer aufrechterhalten wird.

2. Verwendung eines nach Anspruch 1 erhaltenen Pruduktes als Brennmaterial, dadurch gekennzeichnet, daß der Kalk in ausreichender Menge zugemischt wird, um einen pH-Wert von mindestens 12 einzustellen.

3. Verwendung eines nach den Ansprüchen 1 oder 2 erhaltenen Produktes als Brennmaterial, dadurch gekennzeichnet, daß der Kalk gleichzeitig während des mechanischen Zerkleinerns des Abfalls, vorzugsweise in einer Rotationstrommel, zugemischt wird.

4. Verwendung eines nach den Ansprüchen 1 oder 2 erhaltenen Produktes als Brennstoff, dadurch gekennzeichnet, daß der Kalk nach einer vorangegangenen totalen oder teilweisen Homogenisierung des Abfalls zugemischt wird.

5. Verwendung eines nach Anspruch 1 erhaltenen Produktes als Brennmaterial, dadurch gekennzeichnet, daß als Abfall Müll mit einem Wassergehalt von 20 bis 40% eingesetzt wird und der Kalk in einer Menge von mindestens 4 Kg pro Tonne Abfall, vorzugsweise von mindestens 50 Kg pro Tonne Abfall, bezogen auf CaO, zugemischt wird.

6. Verwendung eines nach Anspruch 1 erhaltenen Produktes als Brennmaterial, dadurch gekennzeichnet, daß der Kalk pulverisierter, leichtgebrannter Kalk ist.

**Revendications**

1. Utilisation comme combustible du produit obtenu par mélange intime de produits résiduaires choisis parmi les ordures, les résidus de scierie, les résidus forestiers, les résidus de papier et les résidus agricoles, dont les composants non combustibles et/ou réutilisables peuvent éventuellement être séparés, avec de la chaux sous forme de chaux calcinée (CaO), de chaux hydratée ou de dolomite calcinée, en une quantité suffisante pour inactiver les microorganismes présents dans le résidu en assurant un pH d'au moins 11 du liquide contenu dans le résidu et pour maintenir essentiellement ce pH pendant la totalité de la période de stockage.

2. Utilisation comme combustible du produit obtenu selon la revendication 1 où la chaux est mélangée en une quantité suffisante pour assurer un pH d'au moins 12.

3. Utilisation comme combustible du produit obtenu selon la revendication 1 ou 2 où la chaux est mélangée pendant le broyage mécanique simultané du résidu, de préférence dans un tambour rotatif.

4. Utilisation comme combustible du produit obtenu selon la revendication 1 ou 2 où la chaux est mélangée après une homogénéisation préalable totale ou partielle du résidu.

5. Utilisation comme combustible du produit obtenu selon la revendication 1 où le résidu est des ordures ayant une teneur en eau de 20 à 40% et la chaux est mélangée en une quantité d'au moins 4 kg par tonne métrique de résidu, de préférence au moins 50 kg par tonne métrique de résidu, calculée en CaO.

6. Utilisation comme combustible du produit obtenu selon la revendication 1 où la chaux est de la chaux pulvérisée légèrement calcinée.